(19) Europäisches Patentamt
European Patent Office
Office européen des brevets

(11) **EP 1 817 215 B1**

(12) **EUROPÄISCHE PATENTSCHRIFT**

(45) Veröffentlichungstag und Bekanntmachung des Hinweises auf die Patenterteilung:
**20.05.2015 Patentblatt 2015/21**

(21) Anmeldenummer: **05803148.5**

(22) Anmeldetag: **14.11.2005**

(51) Int Cl.:
***B60T 8/17*** *(2006.01)*

(86) Internationale Anmeldenummer:
**PCT/EP2005/055958**

(87) Internationale Veröffentlichungsnummer:
**WO 2006/053864 (26.05.2006 Gazette 2006/21)**

(54) **VERFAHREN ZUR ÜBERSCHLAGSVERHINDERUNG BEI KRAFTRÄDERN**

METHOD FOR PREVENTING ROLLOVER IN MOTORCYCLES

PROCEDE POUR EVITER LES TONNEAUX POUR DES MOTOS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.11.2004 DE 102004055555**
**14.11.2005 DE 102005054557**

(43) Veröffentlichungstag der Anmeldung:
**15.08.2007 Patentblatt 2007/33**

(73) Patentinhaber: **Continental Teves AG & Co. oHG**
**60488 Frankfurt am Main (DE)**

(72) Erfinder:
• **KREMER, Michael**
**64846 Gross-Zimmern (DE)**
• **GRONAU, Ralph**
**35083 Wetter (DE)**
• **BURKHARD, Dieter**
**55411 Bingen-Büdesheim (DE)**
• **WOYWOD, Jürgen**
**64546 Mörfelden (DE)**
• **REVIOL, Ralf**
**63128 Dietzenbach-Steinberg (DE)**

(56) Entgegenhaltungen:
**EP-A- 0 537 724    US-A- 5 324 102**
**US-A- 5 386 366    US-A1- 2003 066 720**

**Beschreibung**

Die Erfindung betrifft ein Verfahren gemäß Oberbegriff von Anspruch 1, sowie ein Computerprogrammprodukt gemäß Anspruch 9.

Das Kraftrad hat sich im Laufe der letzten Jahrzehnte von einem kostengünstigen Fortbewegungsmittel zu einem Freizeitgefährt entwickelt, bei welchem auch vermehrt die Sicherheit des Fahrers in den Vordergrund gerückt wird. Ähnlich wie bei den Automobilen vor einigen Jahren werden zunehmend auch Krafträder mit Anti-Blockiersystemen (ABS) ausgerüstet. Aus der EP 0 548 985 B1 ist beispielsweise eine Blockierschutzvorrichtung für Krafträder bekannt. Ferner ist aus der DE 40 00 212 A1 ein Verfahren zum blockiergeschützten Bremsen eines Kraftrades und zum Bestimmen des Haftbeiwertes bekannt.

Während einer starken Bremsung eines Kraftrades besteht die Gefahr, dass durch eine zu große Bremskraft am Vorderrad das Hinterrad von der Fahrbahn abhebt und sich das Kraftrad aufstellt. Im Extremfall kann dies zu einem Überschlag des Kraftrads führen. Dieser Sachverhalt ist jedem Kraftradfahrer bekannt und wird gefürchtet. Da es nur sehr geübten Fahrern gelingt, diese Grenzsituation einer sehr hohen Bremsleistung in Verbindung mit einem beginnenden Abheben des Hinterrades zu bemerken und auch zu beherrschen, bremsen Normalfahrer eher etwas vorsichtiger, um diese Grenzsituation sicher zu vermeiden, und verschenken dadurch Bremsweg. In Paniksituationen ist es aber auch geübten Fahrern oft nicht möglich, eine solche Grenzsituation zu vermeiden.

Auch während einer ABS-geregelten Bremsung kann diese kritische Situation des Abhebens des Hinterrades entstehen. Bedingt durch die hohe Reibwertausnutzung des ABS wird die Situation auf hohen Reibwerten sogar fast zwangsläufig erzeugt.

Aus der US 5,386,366 ist ein Verfahren zur Bremskraftregelung von Motorrädern bekannt, wobei eine Abhebeerkennung anhand der Fahrzeugverzögerung und des Hinterradgeschwindigkeitsverlaufs durchgeführt wird.

Eine Vermeidung der Grenzsituation durch eine sogenannte Abhebeerkennung, welche das Abheben des Hinterrades aus dem Radverhalten erkennt, bedarf Zeit, um das charakteristische Radverhalten zu detektieren. Dies hat zur Folge, dass sich das Kraftrad unter Umständen schon recht weit aufgestellt hat und dass mit einem recht großen Bremsdruckabbau am Vorderrad reagiert werden muss, um dieser äußerst kritischen Situation entgegenzuwirken. Die Gegenmaßnahme kann aber bedingt durch die Detektionszeit zu spät kommen, oder aber es kommt zu einer nicht zu vermeidenden Unterbremsung des Kraftrades.

Daher besteht die Aufgabe der vorliegenden Erfindung darin, ein Verfahren zur Überschlagsverhinderung bei Krafträdern mit einem Anti-Blockiersystem bereitzustellen, welches das Abheben des Hinterrades frühzeitig verhindert, ohne dass es zu einer signifikanten Unterbremsung des Fahrzeugs kommt.

Diese Aufgabe wird erfindungsgemäß durch das Verfahren gemäß Anspruch 1 gelöst.

Der Erfindung liegt der Gedanke zugrunde, dass, wenn eine Fahrzeugverzögerung vorliegt, welche einen kritischen, zu einem möglichen Überschlag führenden fahrzeugspezifischen Schwellenwert übersteigt, ein Sonderregelungsmodus zur Bremsdruckregelung an der Vorderradbremse eingeleitet wird. Zeigt das Hinterrad während des Sonderregelungsmodus Tendenzen zum Abheben, d.h. kommt es zu einer Verringerung der Normalkraft am Hinterrad, so wird der Bremsdruck am Vorderrad gehalten oder reduziert. Dadurch erlangt das Hinterrad wieder vollen Bodenkontakt. Eine Verringerung der Normalkraft am Hinterrad während des Sonderregelungsmodus wird durch einen ABS-Druckabbau am Hinterrad erkannt und ein Bremsdruckabbau am Vorderrad wird in Abhängigkeit von dem Bremsdruckabbau an der Hinterradbremse durchgeführt.

Der Begriff "Normalkraft am Hinterrad" beschreibt erfindungsgemäß die auf dem Hinterrad ruhende Gewichtskraft.

Unter dem Begriff "Schlupfeinlauf" soll erfindungsgemäß verstanden werden, dass die Radgeschwindigkeit des betrachteten Rades sich von der Fahrzeuggeschwindigkeit entfernt, so dass es zu einem Schlupf s>0 kommt.

Der Begriff "Radschlupfmuster" soll in Verallgemeinerung erfindungsgemäß das Schlupfverhalten / den Schlupfverlauf eines Rades und/oder das Geschwindigkeitsverhalten, welches direkt mit dem Schlupf zusammenhängt, und/oder das Beschleunigungsverhalten eines Rades umfassen.

In einer bevorzugten Ausführungsform des erfindungsgemäßen Verfahrens wird die Sonderregelung des Vorderradbremsdrucks nur bei einem stabil laufenden Vorderrad, welches sich nicht in einer Druckabbauphase der ABS-Regelung befindet, eingeleitet.

Eine Verringerung der Normalkraft am Hinterrad während des Sonderregelungsmodus wird durch den Bremsdruckverlauf an der Hinterradbremse erkannt. Es wird die Verringerung der Normalkraft anhand einer ABS-Druckabbauphase am Hinterrad erkannt.

Befindet sich am Hinterrad ein Raddrucksensor, so wird eine Verringerung der Normalkraft anhand eines nahe 0bar liegenden Bremsdruckniveaus erkannt.

In einer weiteren bevorzugten Ausführungsform wird eine Verringerung der Normalkraft am Hinterrad während des Sonderregelungsmodus anhand des Radschlupfmusters des Hinterrades, ganz besonders bevorzugt anhand eines Schlupfeinlaufs des Hinterrades, erkannt.

Es ist ebenfalls bevorzugt den Bremsdruckverlauf an der/den Vorderradbremse/n und/oder das Radschlupfmuster des Vorderrades zu einer Erkennung eines kritischen Verzögerungsanteils des Vorderrades, und damit zu einer Erkennung der Verringerung der Normalkraft am Hinterrad, heranzuziehen.

Es ist bevorzugt, dass der Druckaufbaugradient des Vorderradbremsdrucks während des Sonderregelungsmodus begrenzt wird. Besonders bevorzugt wird der Druckaufbaugradient des Vorderradbremsdrucks im Sonderregelungsmodus schon begrenzt, auch wenn noch keine ABS-Regelung vorliegt.

Ein Vorteil des erfindungsgemäßen Verfahrens im Vergleich zur Abhebeerkennung liegt darin, dass eine frühzeitige Systemreaktion mit deutlich geringerer Modulation des Vorderraddruckes vorliegt. Die geringere Modulation liegt auch in der Tatsache begründet, dass das Hinterrad des Kraftrads noch nicht oder kaum von der Fahrbahn abgehoben hat, wodurch es noch nicht zu einer kritischen Verlagerung des Fahrzeugschwerpunkts gekommen ist.

Die Erfindung betrifft auch ein Computerprogrammprodukt, welches einen Algorithmus nach dem vorstehend beschriebenen Verfahren definiert.

Weitere bevorzugte Ausführungsformen ergeben sich aus den Unteransprüchen. Die Erfindung wird im Folgenden anhand von Ausführungsbeispielen und einer Figur beschrieben.

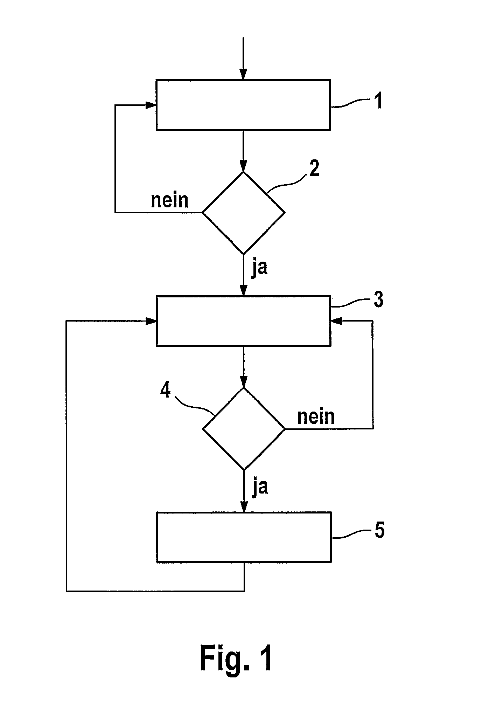

Fig. 1 zeigt ein Blockschaltbild des beispielgemäßen Verfahrens. Dabei bezeichnet Block 1 ein ABS-Regelprogramm. In Block 2 wird die Fahrzeugverzögerung a mit einem fahrzeugspezifischen kritischen, zum möglichen Über-schlag führenden Wert $a_{limit}$ (z.B. $a_{limit}$ = -0,5 g) verglichen. Die Erkennung einer Fahrzeugverzögerung a, welche den Schwellenwert $a_{limit}$ unterschreitet

$$a < a_{limit} \qquad\qquad bzw.$$

Betrag von a > Betrag von $a_{limit}$,
im Folgenden "kritische Verzögerung" genannt, wird als Auslösekriterium für die Einleitung eines Sonderregelungsmodus 3 der normalen ABS-Routine 1 verwendet. Der Wert der kritischen Verzögerungsschwelle $a_{limit}$ ist abhängig von dem verwendeten Fahrzeug und von der fahrzeugspezifischen Konfiguration des Bremssystems. Wird dann in Block 4 eine Verringerung oder ein Verlust der Normalkraft am Hinterrad festgestellt, so wird eine Sonderregelung 5 des Vorderradbremsdrucks durchgeführt. Hierzu wird beispielgemäß der Bremsdruck am Vorderrad gehalten oder abgebaut.

Bei einer kritischen Verzögerung, d.h. im Sonderregelungsmodus 3, wird davon ausgegangen, dass, zumindest bei einem Großteil der Fälle, jeder Schlupfeinlauf des Hinterrades durch eine Reduzierung der Normalkraft erzeugt wird. Der Beginn der Abhebesituation ist somit durch einen entsprechenden Schlupfeinlauf am Hinterrad gekennzeichnet. Bei einem Schlupfeinlauf des Hinterrades wird durch die normale ABS-Routine 1 eine Druckabbauphase erkannt und ein entsprechend dimensionierter Druckabbau im Hinterradbremskreis eingesteuert. Die Größe des Druckabbaus hängt zum einen von der systembedingten hydraulisch wirksamen Mindestansteuerung des Auslassventils, zum anderen von dem in dieser Situation erreichten Schlupfwert (z.B. abhängig von dem Reibwert der Straße oder von den Witterungsbedingungen) sowie von der entsprechenden Radverzögerung ab. Das bedeutet, dass von dem ABS-Algorithmus zu dem am Hinterrad entstehenden Schlupf und den auftretenden Radverzögerungen proportionale Druckabbaupulse im Hinterradbremskreis eingesteuert werden.

Die Auswertung des Schlupfeinlaufs und/oder des am Hinterrad eingesteuerten Druckabbaus kann also als Maß des Normalkraftverlustes angesehen werden, welcher sich durch die dynamische Radlastverteilung des Kraftrades ergibt. Im Sonderregelungsmodus wird der Normalkraftverlust anhand des auftretenden Hinterradschlupfs bewertet und es wird hieraus ein entsprechender (präventiver) Druckabbau, oder ein Druckabbau der Größe Null, d.h. Druckhalten, auch für das Vorderrad generiert. Dieser Vorderraddruckabbau führt zu einer geringfügigen Verringerung der Fahrzeugverzögerung, in der Art, dass gerade nur das zur Abhebeverhinderung benötigte Maß abgebaut wird.

Aber nicht bei jedem Eintritt in die ABS-Druckabbauphase am Hinterrad wird eine Sonderregelung an dem Vorderrad durchgeführt. Ist die zeitliche Abfolge der Eintritte der ABS-Druckabbauphasen hoch (z.B. >3Hz), wird dies als Schwingung angesehen, und es erfolgt keine Sonderregelung am Vorderrad. Diese Schwingungen sind außerdem durch kurze Schlupfphasen gekennzeichnet, wie sie z.B. durch ein schwingendes Motorschleppmoment generiert werden.

Ist im Hinterradbremskreis ein Bremsdrucksensor vorhanden, und wird durch die ABS-Regelungslogik der Druck im Hinterradbremskreis auf ein nahe 0 bar liegendes Druckniveau reduziert, so ist auch dies ein Indiz für einen "Verlust" der Normalkraft, wenn eine kritische Fahrzeugverzögerung vorliegt, und eine Sonderregelung des Vorderradbremsdrucks wird eingeleitet.

Die Sonderregelung des Vorderradbremsdrucks sieht vor, dass bei Druckabbauphasen an dem Hinterrad ein Anteil des Druckabbaus auch am Vorderrad eingesteuert wird. Die Höhe des am Vorderrad eingeleiteten Druckabbaus wird hierbei in Abhängigkeit vom Überschreiten der fahrzeugspezifischen kritischen Verzögerungsschwelle bestimmt, d.h. je weiter der kritische Schwellenwert Betrag von $a_{limit}$ überschritten wurde, umso größer wird der auf das Vorderrad übertragenen Anteil gewählt. Der übertragene Druckabbau kann bei besonders kritischen Situationen oder Fahrzeugen sogar die Größe des am Hinterrad eingesteuerten Druckabbaus übersteigen.

In einer anderen Ausführungsform des beispielgemäßen Verfahrens erfolgt die Dimensionierung des an dem Vorderrad eingesteuerten Druckabbaus durch eine definiert einzusteuernde Druckdifferenz. Diese definierte Druckdifferenz wird in Abhängigkeit von der Überschreitung der fahrzeugspezifischen kritischen Verzögerungsschwelle festgelegt.

Ein ABS-Regelungseintritt des Hinterrades vor dem Vorderrad (im kritischen Fahrzeugverzögerungsbereich) führt zu einem Druckstop/-halten oder zu einer Abflachung des Druckaufbaugradienten am Vorderrad. Dies ermöglicht eine Einbindung des gegebenenfalls zu übertragenden Druckabbaus in die bestehenden ABS-Regelstrukturen.

Wird nach dem Einbremsen auf dem Vorderrad (unabhängig ob eine Integralbremse vorliegt oder nicht) ein Einbremsen durch den Fahrer auf dem Hinterrad durchgeführt, und steigt die Fahrzeugverzögerung durch die Betätigung der Hinterradbremse soweit an, dass hierdurch ein Schlupfeinlauf (und damit eine Druckabbauphase) am Hinterrad erzeugt wird, während der Bremsdruck an der Vorderradbremse nahezu unverändert bleibt, so wird dies als Indiz für noch übertragbare Bremskräfte des Hinterrades angesehen. Dies setzt eine gewisse Normalkraft am Hinterrad voraus und es erfolgt somit keine Sonderregelung 5 des Vorderradbremsdrucks.

Stehen in dem Bremssystem entsprechende Bremsdrucksensoren an Vorder- und Hinterrad zur Verfügung, so werden diese in Verbindung mit den radindividuellen Druck-Verzögerungskennlinien derart ausgewertet, dass kritische Verzögerungsanteile des Vorderrades die Sonderregelung wieder aktivieren und Druckabbauphasen eingesteuert werden.

Bei Bremssystemen ohne entsprechende Drucksensoren, werden die Radschlupfmuster der Räder (d.h. das Schlupf- und/oder das Beschleunigungsverhalten, welche einzeln oder zusammen ausgewertet werden können) ausgewertet, um einen kritischen Bremskraftanteil des Vorderrades zu erkennen.

In Abhängigkeit von der Fahrzeugverzögerung (Fahrzeugverzögerungssignal oder Verzögerungssensorik) und/oder der Dimensionierung des Druckabbauübertrags auf das Vorderrad kann zusätzlich die Verzögerungsvorgabe, z.B. die Steigung der Fahrzeugreferenzgeschwindigkeit und/oder die Radbeschleunigungsschwellenwerte/-grenzwerte, limitiert werden.

Ein verzögerter Druckaufbau am Vorderrad (z.B. in dieser Situation längere Aufbaupausen, d.h. längere Pausen zwischen den Druckaufbaupulsen) kann einen vergleichbaren Effekt erzielen.

Bedingt durch den auf das Vorderrad anteilig übertragenen Druckabbau steigt automatisch das Normalkraftniveau des Hinterrades. Hierdurch kann es in der ABS-Regelung zu einem schnelleren/stärkeren Druckaufbau am Hinterrad kommen, d.h. das Bremsdruckniveau des Hinterrades wird angehoben, und der durch den Vorderraddruckabbau erzeugte Bremskraftverlust wird zumindest teilweise kompensiert.

Der Aufbau eines Integralbremssystems bietet die besten Voraussetzungen zur Durchführung des beispielgemäßen Verfahrens, allerdings ist das Verfahren auch bei anderen Bremssystemen einsetzbar.

Für Krafträder ohne Integralbremssystem erfolgt die Bewertung des Normalkraftverlustes am Hinterrad unter Einbeziehung des vom Fahrer im Hinterradbremskreis eingebremsten Druckes. Bei Bremsungen "ohne" Bremsdruck im Hinterradbremskreis wird zur Auswertung am Hinterrad der positive Schlupf herangezogen. Das abhebende Hinterrad wird die beim Abheben vorliegende Geschwindigkeit nahezu beibehalten oder seine Geschwindigkeit wird mit geringer Dynamik absinken (Verzögerung im Bereich von etwa -0.3g bis 0g). Die Hinterradgeschwindigkeit wird somit über der Fahrzeugreferenzgeschwindigkeit liegen, da das Fahrzeug weiterhin vom Vorderrad gebremst wird. Liegt die Hinterradgeschwindigkeit etwa 4 km/h über der Fahrzeugreferenzgeschwindigkeit, wird die Sonderregelung ausgelöst und in Abhängigkeit des positiven Schlupfes der Bremsdruckabbau an dem Vorderrad dimensioniert.

Eine weitere Ausführungsvariante besteht darin, den positiven Schlupf des Hinterrades als Bremsschlupf auf das Vorderrad zu übertragen. Dieser virtuelle Schlupf erzeugt eine Druckabbauphase am Vorderrad, was das weitere Abheben verhindert.

## Patentansprüche

1. Verfahren zur Überschlagsverhinderung bei Krafträdern mit einem Anti-Blockiersystem (ABS), in welchem die Schritte:

   - Vergleichen der Fahrzeugverzögerung mit einem fahrzeugspezifischen Schwellenwert (2),
   - Erkennen einer kritischen Verzögerung, wenn der Betrag der Fahrzeugverzögerung größer ist als der Betrag des fahrzeugspezifischen Schwellenwertes, und
   - Einleiten eines Sonderregelungsmodus (3) zur Bremsdruckregelung an der/den Vorderradbremse/n, wenn eine kritische Verzögerung vorliegt,
   durchgeführt werden, und wobei, wenn eine Verringerung der Normalkraft am Hinterrad (4) während des Sonderregelungsmodus (3) erkannt wird, eine Sonderregelung (5) des Bremsdrucks, insbesondere eine Verringerung des Gradienten des Bremsdruckaufbaus oder ein Bremsdruckhalten oder eine Bremsdruckabbauphase, an der/den Vorderradbremse/n durchgeführt wird, **dadurch gekennzeichnet, dass** die Verringerung der Normalkraft am Hinterrad (4) anhand eines Bremsdruckabbaus an der Hinterradbremse erkannt wird und dass ein Bremsdruckabbau an der/den Vorderradbremse/n in Abhängigkeit von dem Bremsdruckabbau an der Hinterradbremse durchgeführt wird.

2. Verfahren nach Anspruch 1, **dadurch gekennzeichnet, dass** die Sonderregelung des Vorderradbremsdruckes (5) nur bei einem stabil laufenden Vorderrad, insbesondere nicht während einer Druckabbauphase der ABS-Regelung, eingeleitet wird.

3. Verfahren nach Anspruch 1 oder 2, **dadurch gekennzeichnet, dass** die Verringerung der Normalkraft am Hinterrad (4) zusätzlich anhand mindestens einer der folgenden Größen erkannt wird:

    - Radschlupfmuster des Hinterrades
    - Bremsdruckverlauf an der/den Vorderradbremse/n
    - Radschlupfmuster des Vorderrades

4. Verfahren nach einem der Ansprüche 1 bis 3, **dadurch gekennzeichnet, dass** ein vorgegebener Anteil des Bremsdruckabbaus an der Hinterradbremse als Bremsdruckabbau an der/den Vorderradbremse/n eingesteuert wird oder dass der Bremsdruckabbau an der/den Vorderradbremse/n in Form einer vorgegebenen Druckdifferenz zum Bremsdruckabbau an der Hinterradbremse durchgeführt wird.

5. Verfahren nach mindestens einem der Ansprüche 1 bis 4, **dadurch gekennzeichnet, dass** der Bremsdruckabbau an der/den Vorderradbremse/n in Abhängigkeit von der Überschreitung des Fahrzeugverzögerungsschwellenwertes durchgeführt wird.

6. Verfahren nach Anspruch 1, **dadurch gekennzeichnet, dass** keine Sonderregelung des Bremsdrucks an der/den Vorderradbremse/n durchgeführt wird, wenn eine wiederkehrende, hochfrequente Verringerung der Normalkraft am Hinterrad, insbesondere mit einer Frequenz, welche größer als etwa 3 Hz ist, erkannt wird.

7. Verfahren nach mindestens einem der vorhergehenden Ansprüche, **dadurch gekennzeichnet, dass** im Sonderregelungsmodus der Gradient der Fahrzeugreferenzgeschwindigkeit und/oder die Radbeschleunigungsschwellenwerte, insbesondere in Abhängigkeit von der Fahrzeugverzögerung und/oder der Stärke des Bremsdruckabbaus an der/den Vorderradbremse/n, begrenzt werden.

8. Verfahren nach mindestens einem der vorhergehenden Ansprüche, **dadurch gekennzeichnet, dass** im Sonderregelungsmodus der Gradient des Bremsdruckaufbaus an der/den Vorderradbremse/n begrenzt wird.

9. Computerprogrammprodukt, **dadurch gekennzeichnet, dass** dieses einen Algorithmus definiert, welcher ein Verfahren gemäß mindestens einem der Ansprüche 1 bis 8 umfasst.

**Claims**

1. Method for preventing rollover in motor cycles with an anti-lock brake system (ABS) in which the steps:

    - comparing the vehicle deceleration with a vehicle-specific threshold value (2),
    - detecting a critical deceleration if the absolute value of the vehicle deceleration is higher than the absolute value of the vehicle-specific threshold value, and
    - applying a special regulating mode (3) for regulating the brake pressure to the front wheel brake or brakes if a critical deceleration is present,
    are carried out, and wherein, if a reduction in the normal force at the rear wheel (4) is detected during the special regulating mode (3), a special regulating operation (5) of the brake pressure, in particular a reduction in the gradient of the build up of brake pressure or maintaining of the brake pressure or a reduction phase of the brake pressure, is carried out at the front wheel brake or brakes, **characterized in that** the reduction in the normal force at the rear wheel (4) is detected on the basis of a reduction in brake pressure at the rear wheel brake, and **in that** a reduction in brake pressure at the front wheel brake or brakes is carried out as a function of the reduction in brake pressure at the rear wheel brake.

2. Method according to Claim 1, **characterized in that** the special regulation of the front wheel brake pressure (5) is initiated only in the case of a front wheel which is running in a stable fashion, in particular not during a pressure reduction phase of the ABS control system.

3. Method according to Claim 1 or 2, **characterized in that** the reduction in the normal force at the rear wheel (4) is additionally detected on the basis of at least one of the following variables:

- wheel slip pattern of the rear wheel,
- brake pressure profile at the front wheel brake or brakes, and
- wheel slip pattern of the front wheel.

4. Method according to one of Claims 1 to 3, **characterized in that** a predefined proportion of the reduction in brake pressure at the rear wheel brake is applied as a reduction in brake pressure at the front wheel brake or brakes, or **in that** the reduction in brake pressure at the front wheel brake or brakes is carried out in the form of a predefined pressure difference for the reduction in brake pressure at the rear wheel brake.

5. Method according to at least one of Claims 1 to 4, **characterized in that** the reduction in brake pressure at the front wheel brake or brakes is carried out as a function of the exceeding of the vehicle deceleration threshold value.

6. Method according to Claim 1, **characterized in that** no special regulating operation of the brake pressure is carried out at the front wheel brake or brakes if a recurring, high-frequency reduction in the normal force at the rear wheel, in particular with a frequency which is greater than approximately 3 Hz, is detected.

7. Method according to at least one of the preceding claims, **characterized in that** in the special regulating mode the gradient of the vehicle reference speed and/or the wheel acceleration threshold values are limited, in particular as a function of the vehicle deceleration and/or the intensity of the reduction in brake pressure at the front wheel brake or brakes.

8. Method according to at least one of the preceding claims, **characterized in that** in the special regulating mode the gradient of the increase in brake pressure at the front wheel brake or brakes is limited.

9. Computer program product, **characterized in that** said computer program product defines an algorithm which comprises a method according to at least one of Claims 1 to 8.

**Revendications**

1. Procédé pour éviter les tonneaux sur des motos dotées d'un système anti-patinage (ABS) et dans lequel sont exécutées les étapes qui consistent à :

comparer le ralentissement du véhicule à une valeur de seuil (2) spécifique au véhicule,
détecter un ralentissement critique si le niveau du ralentissement du véhicule est supérieur au niveau de la valeur de seuil spécifique au véhicule et
introduire un mode de régulation spécial (3) pour la régulation de la pression de freinage du ou des freins de roue avant lorsqu'un ralentissement critique prévaut,
et dans lequel si une diminution de la force normale est détectée sur la roue arrière (4) pendant le mode de régulation spécial (3), une régulation spéciale (5) de la pression de freinage et en particulier une diminution du gradient de l'établissement de la pression de freinage, le maintien de la pression de freinage ou une phase de délestage de la pression de freinage sont exécutées sur le ou les freins de roue avant,
**caractérisé en ce que**
la diminution de la force normale appliquée sur la roue arrière (4) est détectée sur la base d'un délestage de la pression de freinage sur le frein de la roue arrière et
**en ce qu'**un délestage de la pression de freinage est réalisé sur le ou les freins de roue avant en fonction du délestage de la pression de freinage sur le frein de roue arrière.

2. Procédé selon la revendication 1, **caractérisé en ce que** la régulation spéciale de la pression (5) de freinage de roue avant n'est lancée que lorsque la roue avant se déplace de manière stable et en particulier pas pendant une phase de délestage de pression de la régulation ABS.

3. Procédé selon les revendications 1 ou 2, **caractérisé en ce que** la diminution de la force normale appliquée sur la roue arrière (4) est détectée de plus à l'aide d'au moins l'une des grandeurs suivantes :

   motif de patinage de la roue arrière,
   évolution de la pression de freinage sur le ou les freins de roue avant et
   motif de patinage de la roue avant.

4. Procédé selon l'une des revendications 1 à 3, **caractérisé en ce qu'**une fraction prédéterminée du délestage de la pression de freinage sur le frein de roue arrière est commandée comme délestage de la pression de freinage sur le ou les freins de roue avant ou **en ce que** le délestage de la pression de freinage sur le ou les freins de roue avant est réalisé sous la forme d'une différence prédéterminée de pression en vue de délester la pression de freinage sur le frein de roue arrière.

5. Procédé selon l'une des revendications 1 à 4, **caractérisé en ce que** le délestage de la pression de freinage sur le ou les freins de roue avant est réalisé en fonction du dépassement de la valeur de seuil de ralentissement du véhicule.

6. Procédé selon la revendication 1, **caractérisé en ce qu'**aucune régulation spéciale de la pression de freinage sur le ou les freins de roue avant n'est exécutée si une diminution répétée et à haute fréquence de la force normale est détectée sur la roue arrière, en particulier à une fréquence supérieure à environ 3 Hz.

7. Procédé selon au moins l'une des revendications précédentes, **caractérisé en ce qu'**en mode de régulation spécial, le gradient de la vitesse de référence du véhicule et/ou la valeur de seuil de l'accélération de roue sont limités, en particulier en fonction du ralentissement du véhicule et/ou de l'intensité du délestage de pression de freinage sur le ou les freins de roue avant.

8. Procédé selon au moins l'une des revendications précédentes, **caractérisé en ce qu'**en mode de régulation spécial, le gradient de l'établissement de la pression de freinage sur le ou les freins de roue avant est limité.

9. Produit de programme informatique **caractérisé en ce qu'**il définit un algorithme qui comporte un procédé selon au moins l'une des revendications 1 à 8.

Fig. 1

**EP 1 817 215 B1**

**IN DER BESCHREIBUNG AUFGEFÜHRTE DOKUMENTE**

**In der Beschreibung aufgeführte Patentdokumente**

- EP 0548985 B1
- DE 4000212 A1
- US 5386366 A